# EUROPEAN PATENT APPLICATION

(11) **EP 3 024 074 A1**
(43) Date of publication of application: **25.05.2016**
(21) Application number: 14826244.7
(22) Date of filing: 15.07.2014
(51) Int. Cl.: H01M 8/02, H01M 8/18

(54) **REDOX FLOW BATTERY STACK PROVIDED WITH ION EXCHANGE MEMBRANE AND FLOW FRAME ASSEMBLY**

(30) Priority: 16.07.2013 KR 20130083214
(71) Applicant: H2 Inc., Daejeon 305-500 (KR)
(72) Inventor: HAN, Chang Hoon, Daejeon 301-213 (KR); HAN, Shin, Daejeon 305-761 (KR); HUH, Jee Hyang, Daejeon 305-752 (KR)
(74) Representative: Zardi, Marco
(86) International application number: PCT/KR2014/006369
(87) International publication number: WO 2015/009019

(57) **Abstract**

The present invention relates to a redox flow battery or fuel cell stack assembled by stacking a plurality of plates, the fuel cell stack including an ion exchange membrane and flow frames prefixed to both sides of the ion exchange membrane, wherein the prefixed ion exchange membrane and flow frames are assembled with other plates.

## Description

### TECHNICAL FIELD

The present invention relates to an assembly in which an ion exchange membrane and flow frames, which are principal components of a redox flow battery or fuel cell stack, are combined as one component.

### BACKGROUND ART

A redox flow battery is one of core products closely associated with a new renewable energy, greenhouse gas mitigation, a secondary battery, and a smart grid, which have recently aroused the greatest interest around the globe, and a fuel cell is a new energy generation source alternate to fossil fuels without discharging environmental contamination materials, and is a product whose market rapidly expands around the globe. Recently, most energy has been acquired from fossil fuels, but there are limitations in that energy efficiency is low, and the use of the fossil fuels exerts a seriously bad influence on an environment, such as air pollution, acid rain, and global warming.

In order to solve the limitations due to the use of the fossil fuels, high expectations are being placed on the new renewable energy and the fuel cell. In Korea and around the globe, interest in the new renewable energy rises, and research is actively conducted on the new renewable energy.

A new renewable energy market reaches a maturity stage inside and outside of Korea, but there is a limitation in that an amount of generated energy is significantly changed according to an environmental effect such as a time and weather due to the characteristics of a renewable energy. Accordingly, in order to stabilize power generation of the new renewable energy, there is a need for spread of an energy storage system (ESS) storing the generated renewable energy, and a redox flow battery has received attention as the mass energy storage system.

Many technologies have been developed on the fuel cell due to eco-friendly characteristics without using fossil fuels and an unlimited supply of hydrogen that is a source of the fuel cell, and fuel cell vehicles, generators, or heating systems using the fuel cell have been developed and sold. However, the fuel cell is difficult to manufacture, assemble, and maintain.

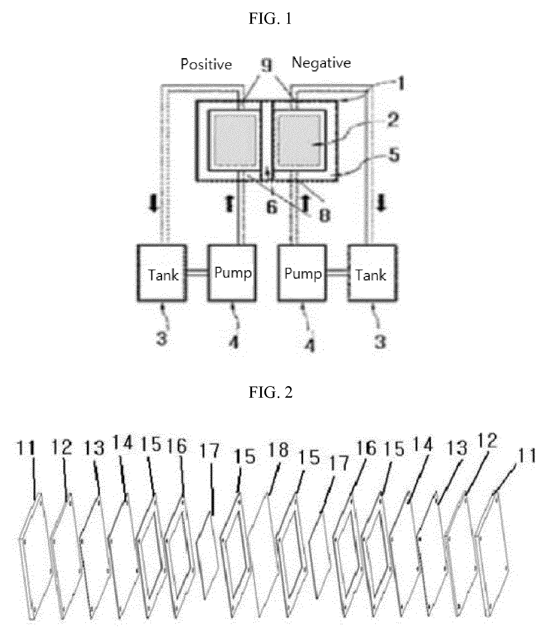

As illustrated in FIG. 1, a general structure of a redox flow battery, to which the present invention is applied, includes a stack 1 formed by stacking cells in which an electrochemical reaction occurs, a tank 3 storing an electrolyte, and a pump 4 supplying the electrolyte from the tank storing the electrolyte to the stack.

FIG. 2 is an exploded perspective view of the stack 1 to which the present invention is applied, and FIG. 2 illustrates an end plate 11-an insulating plate 12-a current plate 13-a bipolar plate 14-a gasket 15-a flow frame 16-an electrode 17-a gasket 15-an ion exchange membrane 18-a gasket 15-an electrode 17-a flow frame 16-a gasket 15-a bipolar plate 14-a current plate 13-an insulating plate 12-an end plate 11 from a left side. A unit cell is formed from the bipolar plate 14 to the bipolar plate 14, and generally, one stack is formed by stacking several ten to several hundred unit cells.

In the present invention, the term "plate" indicates configurations such as the end plate 11, the insulating plate 12, the current plate 13, the bipolar plate 14, and the flow frame 16, which constitute the stack 1 having a plate shape.

Since the end plate 11, the insulating plate 12, the current plate 13, the flow frame 16, and the like have a certain extent of rigidity, the end plate 11, the insulating plate 12, the current plate 13, the flow frame 16, and the like are easy to handle. In contrast, since the ion exchange membrane 18, the gasket 15, the electrode 17, and the like are formed of a flexible material without rigidity, the ion exchange membrane 18, the gasket 15, the electrode 17, and the like are difficult to handle.

In particular, since two electrolytes react with each other in-between the ion exchange membrane 18, the gasket 15 is disposed so as to maintain a sealing between the ion exchange membrane and the flow frames 16. When several hundred plates are pressurized so as to assemble a stack, it is quite difficult to align an ion exchange membrane formed of a flexible material without rigidity and a gasket formed of a flexible material without rigidity, the gasket being adjacent to the ion exchange membrane.

A method of assembling an ion exchange membrane is disclosed in Korean Patent Application Laid-Open No. 10-2006-0096610 entitled "Membrane Electrode Assembly for Fuel Cell, and Stack for Fuel Cell and Fuel Cell System Comprising the Same" and in Korean Patent Application Laid-Open No.10-2011-0135181 entitled "Fuel Cell Stack and Exchange Device of Membrane-Electrode Assembly for Fuel Cell". However, the above-described limitations in assembling the ion exchange membrane 18 and the gasket are not solved, which are formed of the flexible material.

### DETAILED DESCRIPTION OF THE INVENTION

### TECHNICAL PROBLEM

An object of the present invention is to reduce a time consumed to assemble a stack and solve a limitation in assembling an ion exchange membrane formed of a flexible material and a gasket formed of a flexible material and adjacent to the ion exchange membrane in such a manner that before the stack is assembled, flow frames 16 and the ion exchange membrane 18 are preassembled to constitute a unit, and the unit is assembled to facilitate an assemble of the stack.

In addition, another object of the present invention is to reduce production costs by directly fixing the ion exchange membrane 18 to the flow frames 16 to form the ion exchange membrane 18 so as to have a small size.

### TECHNICAL SOLUTION

The present invention relates to a redox flow battery or fuel cell stack assembled by stacking a plurality of plates, the stack including an ion exchange membrane and flow frames prefixed to both sides of the ion exchange membrane, wherein the prefixed ion exchange membrane and flow frames are assembled with other plates.

In addition, according to the present invention, the ion exchange membrane may be directly fixed to the flow frames without a gasket between the flow frames and the ion exchange membrane.

In addition, according to the present invention, the ion exchange membrane may be attached to outer frames of the flow frames by using an adhesive or a double-sided tape.

In addition, according to the present invention, an electrode may be disposed in an inner empty space of each of the outer frames in the flow frames, and the ion exchange membrane may be larger in size than the electrode.

In addition, the present invention relates to a method of assembling a redox flow battery stack, including stacking a plurality of plates, wherein before the stacking, an ion exchange membrane is prefixed to flow frames to be disposed at both sides of the ion exchange membrane.

According to the present invention, it is desirable that the adhesive has a thickness of 200 µm or less.

### ADVANTAGEOUS EFFECTS OF THE INVENTION

Since the ion exchange membrane 18 is a fluttering material such as a plastic bag, there are limitations in that it is difficult to handle the ion exchange membrane 18 at the time of assembling and to fix the ion exchange membrane 18 at an accurate position, and the ion exchange membrane 18 is easily torn and stretched. In the present invention, the ion exchange membrane 18 may be prefixed between two flow frames 16, thereby easily handling the ion exchange membrane 18, and an assembly of the ion exchange membrane 18 and the flow frames 16 may be managed as a separate unit, thereby facilitate quality control and assuring a high quality stack.

In addition, since the ion exchange membrane 18 is directly fixed to the flow frames 16, there is no need for an existing gasket 15 formed of a flexible material and disposed between the ion exchange membrane 18 and the flow frames 16, thereby facilitate the assembly of the stack.

In addition, since the ion exchange membrane 18 is directly fixed between the flow frames 16, the ion exchange membrane 18 may be formed to be smaller, as compared with a case where the ion exchange membrane 18 is fixed by the gasket 15, thereby reducing production costs.

### DESCRIPTION OF THE DRAWINGS

FIG. 1 is a schematic diagram of a redox flow battery to which the present invention is applied.
FIG. 2 is an exploded perspective view of an existing redox flow battery stack.
FIG. 3 is an exploded perspective view of a unit cell in a redox flow battery stack according to the present invention.
FIG. 4 is an exploded perspective view of a flow frame and ion exchange membrane assembly according to the present invention.
FIG. 5 is a diagram for describing a method of fixing an ion exchange membrane, according to the present invention.
FIG. 6 is a diagram for describing an existing method of fixing an ion exchange membrane between flow frames.

### BEST MODE

Hereinafter, the present invention will be described in more detail with reference to the accompanying drawings.

The accompanying drawings illustrate exemplary forms of the present invention and are provided to describe the present invention in more detail, and the technical scope of the present invention is not limited to the accompanying drawings.

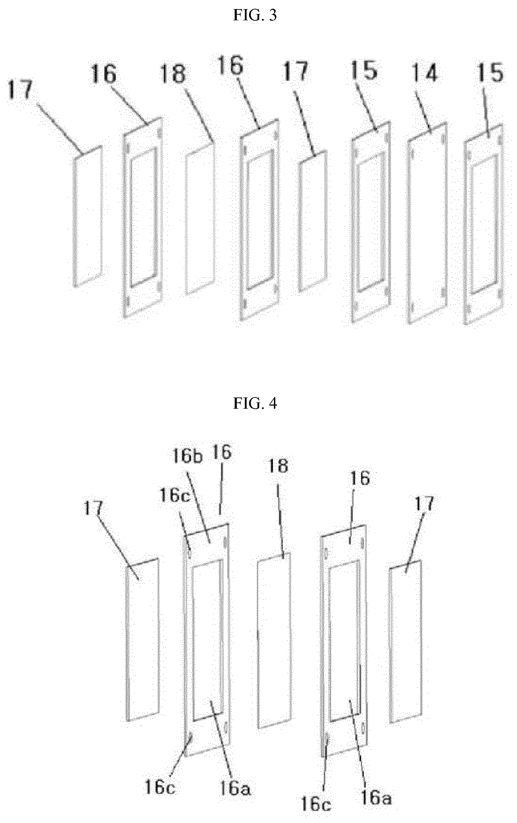

A redox flow battery or fuel cell stack according to the present invention has a repeatedly stacked structure, and FIG. 3 illustrates a configuration of a unit cell in a stack to which the present invention applied. The unit cell is illustrated as including an electrode 17-a flow frame 16-an ion exchange membrane 18-a flow frame 16-an electrode 17-a gasket 15-a bipolar plate 14-a gasket 15.

FIG. 4 illustrates an assembly structure of a flow frame 16-an ion exchange membrane 18-a flow frame 16, according to the present invention.

In the present invention, after one unit is formed by directly fixing the flow frames 16 to both sides of the ion exchange membrane 18, the electrode 17 may be disposed in an inner empty space 16a of the flow frame 16 at the time of assembling the stack.

The ion exchange membrane 18 may be disposed between two flow frames 16 to separate an electrolyte of a cathode and an electrolyte of an anode and may allow an oxidation/reduction reaction to occur through characteristics that allow hydrogen ions to pass through the ion exchange membrane 18 and prevent an electrolyte from passing through the ion exchange membrane 18. The ion exchange membrane is generally formed of a substrate through which ions are able to pass. The ion exchange membrane has a thin thickness of 200 µm or less. In addition, since the ion exchange membrane is a material that directly comes into contact with an electrolyte, it is necessary to maintain a clean surface of the ion exchange membrane. Due to the thin thickness and the maintenance of cleanliness, the ion exchange membrane is difficult to handle.

The ion exchange membrane is disposed between the flow frame 16 of the cathode and the flow frame 16 of the anode, and in the present invention, before the stack is assembled, the ion exchange membrane 18 is prefixed to outer frames 16b of each of the flow frames 16 disposed at the both sides, thereby easily handling the ion exchange membrane having the thin thickness.

In the present invention, it is desirable to attach a perimeter portion of the ion exchange membrane 18 to the outer frames 16b of the flow frames 16 by using an adhesive or a double-sided tape, as a method of fixing the ion exchange membrane 18 to the outer frames 16b of the flow frames 16 disposed at the both sides.

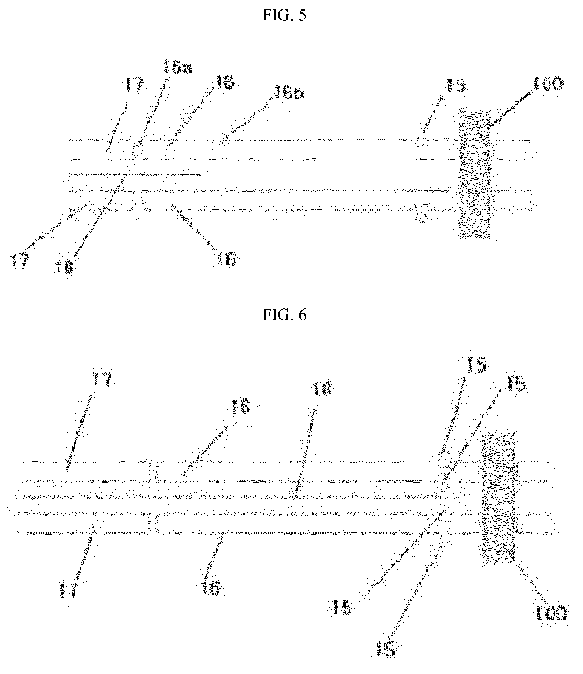

As in the present invention, FIG. 5 illustrates that the ion exchange membrane 18 is directly attached to the flow frames 16 at the both sides, and a seal is not disposed between the flow frames 16 at the both sides.

As in the present invention, when the ion exchange membrane 18 is directly attached to the flow frames 16 by using the adhesive or the double-sided tape, the ion exchange membrane 18 is formed to be a little larger than the inner empty space 16a of each of the flow frames, and thus, the ion exchange membrane 18 may be only attached to the outer frames 16b of the flow frames 16.

On the contrary, in FIG. 6, in order to prevent the leakage of the electrolyte, a gasket 15 is present between the ion exchange membrane 18 and the flow frames 16 in a stacked structure of an existing stack.

In the related art as in FIG. 6, since it is necessary that the gasket 15 is stacked between the ion exchange membrane 18 and the flow frames 16, the stack is assembled through coupling with a bolt 100 to compress, and then, the gasket 15 is compressed by bolt torque, it is necessary that the gasket is installed at a short distance from the bolt and the ion exchange membrane 18 is pressed by the gasket 15. Accordingly, the ion exchange membrane 18 needs to be sufficiently large to extend beyond a position of the gasket 15.

Therefore, the ion exchange membrane 18 according to the present invention may be formed to be small, as compared with the ion exchange membrane 18 of the existing stack structure.

As described above, since the ion exchange membrane 18 is directly fixed to the flow frames 16 by using the adhesive or the double-sided tape, production costs may be reduced by decreasing the size of the ion exchange membrane.

## Claims

1. A redox flow battery stack assembled by stacking a plurality of plates, the redox flow battery stack comprising:
an ion exchange membrane; and
flow frames prefixed to both sides of the ion exchange membrane,
wherein the prefixed ion exchange membrane and flow frames are assembled with other plates.

2. The redox flow battery stack of claim 1, wherein a gasket is not present between the flow frames and the ion exchange membrane.

3. The redox flow battery stack of claim 2, wherein the ion exchange membrane is attached to outer frames of the flow frames by using an adhesive or a double-sided tape.

4. The redox flow battery stack of any one of claims 1 to 3, wherein an electrode is disposed in an inner empty space of each of the outer frames in the flow frames, and the ion exchange membrane is larger in size than the electrode.

5. A method of assembling a redox flow battery stack, comprising stacking a plurality of plates, wherein before the stacking, an ion exchange membrane is prefixed to flow frames to be disposed at both sides of the ion exchange membrane.

6. The method of claim 5, wherein the prefixing is directly performed without a gasket between the flow frames and the ion exchange membrane.

7. The method of claim 6, wherein the ion exchange membrane is attached to outer frames of the flow frames by using an adhesive or a double-sided tape.

8. The method of any one of claims 5 to 7, wherein an electrode is disposed in an inner empty space of each of the outer frames in the flow frames, and the ion exchange membrane is larger in size than the electrode.
